# EUROPÄISCHE PATENTSCHRIFT

(11) **EP 1 154 340 B1**
(45) Veröffentlichungstag und Bekanntmachung des Hinweises auf die Patenterteilung: **12.11.2003**
(21) Anmeldenummer: 01103411.3
(22) Anmeldetag: 14.02.2001
(51) Int. Cl.: G05B 11/36, F16C 39/06

(54) **Magnetlageranordnung für eine Offenend-Spinnvorrichtung**
Magnetic bearing device for an open-end spinner
Palier magnétique pour une installation de filature à extrémité ouverte

(30) Priorität: 10.05.2000 DE 10022736
(43) Veröffentlichungstag der Anmeldung: 14.11.2001
(73) Patentinhaber: Saurer GmbH & Co. KG, 41069 Mönchengladbach (DE)
(72) Erfinder: Coenen, Norbert, 41199 Mönchengladbach (DE)

(56) Entgegenhaltungen:
- DE-A- 3 130 974
- US-A- 5 998 899

## Beschreibung

Die Erfindung betrifft ein Verfahren zum Betreiben einer Magnetlageranordnung für eine Offenend-Spinnvorrichtung gemäß dem Oberbegriff des Anspruches 1 bzw. eine entsprechende Magnetlageranordnung.

Im Zusammenhang mit der Lagerung von Spinnrotoren, die mit hoher Drehzahl in den Spinnvorrichtungen moderner Offenend-Spinnmaschinen umlaufen, sind verschiedene Ausführungsformen bekannt.

Die Mehrzahl der zur Zeit auf dem Markt befindlichen Offenend-Spinnmaschinen weist dabei Spinnrotoren auf, die mit ihrem Rotorschaft im Lagerzwickel einer sogenannten Stützscheibenlagerung gelagert sind.
Bei solchen Stützscheibenlagerungen ist es üblich, zur axialen Fixierung des Spinnrotors ein zusätzliches Axiallager vorzusehen, das entweder als mechanisches Lager oder als Magnetlager ausgebildet sein kann.
Die vorbeschriebenen Lageranordnungen erlauben Rotordrehzahlen > 100.000 min⁻¹.

Wenngleich sich diese Stützscheibenlageranordnungen in der Praxis bewährt haben, weisen sie doch den Nachteil auf, daß sie, insbesondere im Bereich der Laufflächen der Stützscheiben, mechanisch erheblich beansprucht werden. Die in diesen Bereichen auftretende Walkarbeit führt dabei einerseits zu einem nicht unerheblichen Verschleiß der Laufflächen und anderseits zu Energieverlusten.

Es sind deshalb in der Vergangenheit bereits Versuche unternommen worden, derartige, mit hoher Drehzahl umlaufende Spinnrotoren verschleißfrei zu lagern.

In der DE-OS 28 18 255, der DE 31 30 974 A1 oder der DE 198 27 606 A1 sind beispielsweise einzelmotorisch angetriebene Spinnrotoren beschrieben, die berührungslos in entsprechenden Magnetlageranordnungen gelagert sind.

Die DE-OS 28 18 255 beschreibt dabei eine magnetische Lageranordnung, die stator- und rotorseitig jeweils wenigstens einen ring- oder scheibenförmigen Permanentmagneten aufweist. Die Permanentmagnete sind dabei so angeordnet, daß zwischen Rotor und Stator abstoßende magnetische Lagerkräfte wirksam sind.
Zwischen den Permanentmagneten des Stators sind außerdem elektrische Wicklungen vorgesehen, durch die in Abhängigkeit der elektrischen Stromflußrichtung die Magnetkraft verstärkt oder abgesenkt werden kann.

Die elektrischen Wicklungen werden dabei über eine entsprechende Regeleinrichtung in Abhängigkeit von Signalen eines Sensors angesteuert, der die axiale Abweichung des Rotors aus seiner Sollage erfaßt.
Das heißt, bei äußerer axialer Belastung des Rotors wird ein Regelstrom bewirkt, der entsprechend dieser äußeren Belastung eine gegengerichtete elektromagnetische Kraft erzeugt.

Diese bekannte Art der Regelung erfordert eine hohe Sensorgenauigkeit, die nur mit sehr aufwendigen und entsprechend kostspieligen Sensoren erreicht werden kann.

Die DE 31 30 974 A1 beschreibt eine ähnlich aufgebaute Magnetlageranordnung für eine Offenend-Spinnvorrichtung.
Diese bekannte Lageranordnung verfügt, wie die vorstehend beschriebene Einrichtung, über eine auf ein Sensorsignal ansprechende Regeleinrichtung sowie wenigstens einen von dieser Regeleinrichtung angesteuerten Elektromagneten zur Erzeugung einer axialen Rotorbewegung. Als Sensor kommt dabei ein auf axiale Bewegungen des Spinnrotors ansprechender Geschwindigkeitssensor zum Einsatz.

Die Regeleinrichtung ist derart aufgebaut, daß in der Sollage des Spinnrotors der Strom für den Elektromagneten wenigstens näherungsweise Null ist.
Das heißt, diese bekannte Regeleinrichtung verfügt über einen PD-Regler mit positiver Rückkopplung, dessen Eingang an den Geschwindigkeitssensor angeschlossen ist.

Auch die vorstehend beschriebene Magnetlageranordnung konnte in Verbindung mit Offenend-Spinnvorrichtungen in der Praxis nicht überzeugen.
Insbesondere die Verwendung eines Geschwindigkeitssensors stellte sich als problematisch heraus, da derartige Sensoren äußerst empfindlich auf magnetische Störfelder reagieren, wie sie in Verbindung mit elektromotorischen Einzelantrieben nahezu unvermeidlich sind.

Des weiteren ist durch die DE 198 27 606 A1 eine Magnetlageranordnung bekannt, bei der der Rotorschaft des Spinnrotors in zwei axial beabstandet angeordneten Permanentmagnetpaaren berührungslos abgestützt ist. Die Permanentmagnetpaare sind dabei so ausgebildet, daß sich jeweils ungleiche Magnetpole gegenüberstehen.
Zum Einhalten einer axialen Mittenlage des Spinnrotors ist auch hier eine elektromagnetische Mittenlageregelung vorgesehen.

Das heißt, die axiale Mittenlageregelung des Spinnrotors erfolgt durch entsprechende gezielte Bestromung wenigsten einer Spule, die in der Nähe des Statorpermanentmagneten angeordnet ist.

Bei dieser bekannten Magnetlagereinrichtung ist durch entsprechende magnetische Auslegung der vorderen und hinteren Magnetlagerkomponenten außerdem eine Vorzugsfallrichtung des Spinnrotors verwirklicht.

Vergleichbare Magnetlageranordnungen sind auch aus dem Kraftfahrzeugbau bekannt.
Die US-PS 5,998,899 zeigt und beschreibt beispielsweise ein Kraftfahrzeug mit einem Hybrid-Antrieb.
Das heißt, dieses Fahrzeug weist einen Energiespeicher in Form eines Schwungrades auf. Das Schwungrad ist dabei über seine Rotorachse jeweils endseitig in definiert bestrombaren, radialen und axialen Magnetlagern abgestützt.
Zur Minimierung des Stromverbrauches ist außerdem eine Regelung vorgesehen, die dafür sorgt, daß in der Parkstellung der Einrichtung der Spulenstrom durch negative Rückkopplung eines Integrators gegen Null geregelt wird.

Ausgehend vom vorgenannten Stand der Technik liegt der Erfindung die Aufgabe zugrunde, ein Verfahren zu entwickeln, das einen reibungslosen Betrieb einer Magnetlageranordnung für Offenend-Spinnvorrichtungen ermöglicht, wobei die Magnetlageranordnung sowohl kostengünstig in der Fertigung als auch zuverlässig während des Betriebes sein soll.

Diese Aufgabe wird erfindungsgemäß durch ein Verfahren gelöst, wie es im Anspruch 1 erläutert ist.

Eine Magnetlageranordnung zur Durchführung des Verfahrens ist Gegenstand des Anspruches 2.
Vorteilhafte Ausgestaltungen einer solchen Magnetlageranordnung sind in den anschließenden Unteransprüchen beschrieben.

Das erfindungsgemäße Verfahren hat insbesondere den Vorteil, daß zur Lageerkennung des magnetisch gelagerten Spinnrotors ein einfacher und kostengünstiger Lagesensor eingesetzt werden kann, der insbesondere bezüglich der Nullpunktgenauigkeit und der Nullpunktstabilität nur relativ geringe Anforderungen erfüllen muß.
Das heißt, die eingesetzte Regeleinrichtung bearbeitet das Signal des Lagesensors zunächst derart, daß durch den Integrator eine Gegenkopplung des Spulenstromes initiiert wird, die bereits nach kurzer Zeit dazu führt, daß sich der Spulenstrom in den Aktoren mit ausreichender Genauigkeit gegen Null einregelt. Die Negierung des Eingangssignales des Integrators führt anschließend zu einer Mitkopplung in der Regelschleife und damit zu einem Stromanstieg in der/den Aktorspule(n), wodurch der Spinnrotor von seinem Axialfanglager abgehoben und in seine Betriebslage eingeregelt wird, in der der Spulenstrom in den Aktoren wieder gegen Null geht.

Der Lagesensor ist, wie im Anspruch 2 beschrieben, als induktiver Sensor ausgebildet, dessen Ausgangssignal mittels eines PD-Reglers sowie eines Integrators, dessen Eingangssignal negierbar ist, auf einfache Weise zur Regelung der bestrombaren Aktoren der Mittenlageregeleinrichtung verarbeitet werden kann.

In bevorzugter Ausführungsform generiert der Lagesensor dabei, wie im Anspruch 3 dargelegt, ein Ausgangssignal, dessen Wert direkt proportional dem Abstand Rotorschaftende/Lagesensor ist.

Störsignale werden dabei vorzugsweise mittels einer Filter-/Verstärkereinheit minimiert, die, wie im Anspruch 4 angedeutet, zwischen Lagesensor und PD-Regler eingeschaltet ist.

Wie im Anspruch 5 beschrieben, ist der PD-Regler ausgangsseitig, vorteilhafterweise über einen Leistungsverstärker, sowohl an die Aktoren als auch an den Integrator angeschlossen.

In bevorzugter Ausführungsform ist der Integrator außerdem, wie in den Ansprüchen 6 und 8 weiter ausgeführt, eingangsseitig mit einem Negierungsglied sowie mit einem Offset-Eingabemittel verbunden.

Über das Negierungsglied kann dabei in Verbindung mit dem Offset-Eingabemittel auf einfache und zuverlässige Weise das Eingangssignal des Integrators derart bearbeitet werden, daß eine positive Rückkopplung des Spulenstromes entsteht, was schließlich zu einem sicheren Abheben des Spinnrotors von seinem Axialfanglager führt.
Das Offset-Eingabemittel definiert dabei eindeutig die Polarität des Spulenstromes und damit die Kraftrichtung, so daß jederzeit eine sichere Abhebung des Spinnrotors aus seinem axialen Fanglager gewährleistet ist.

Wenngleich die im Anspruch 5 beschriebene Ausbildung eine bevorzugte Ausführungsform darstellt, ist es in alternativer Ausgestaltung auch möglich, das Eingangssignal des Integrators, wie im Anspruch 9 angedeutet, direkt vom Ausgangssignal des PD-Reglers oder, wie im Anspruch 10 beschrieben, unmittelbar vom Ausgangssignal der Filter-/Verstärkereinheit abzuleiten.

Anstelle eine Negierungsgliedes, wie es im Anspruch 6 beschrieben ist, kann auch, wie im Anspruch 7 dargelegt, vorgesehen sein, daß der Integrator eingangsseitig auf einen Punkt der Regelschleife schaltbar ist, der eine Negation des Signals aufweist.

Das heißt, der Integrator ist über ein entsprechendes Schaltmittel direkt an den in einem solchen Fall negierten Ausgang der Filter-/Verstärkereinheit oder den negierten Ausgang des PD-Reglers anschließbar.

Eine mögliche Ausgestaltungsvariante der Erfindung besteht auch darin, das Eingangssignal des Integrators direkt vom Lagesensor abzuleiten (Anspr.11).

Weitere Einzelheiten der Erfindung sind einem nachfolgend anhand der Zeichnungen erläuterten Ausführungsbeispiel entnehmbar.

Es zeigt:
- Fig. 1: in Seitenansicht eine Offenend-Spinnvorrichtung mit einem einzelmotorisch angetriebenen Spinnrotor, der mit seinem Rotorschaft in einer Magnetlageranordnung abgestützt ist,
- Fig. 2: die Magnetlageranordnung gemäß Figur 1 mit ihrer erfindungsgemäßen Mittenlageregeleinrichtung, in einem größeren Maßstab.

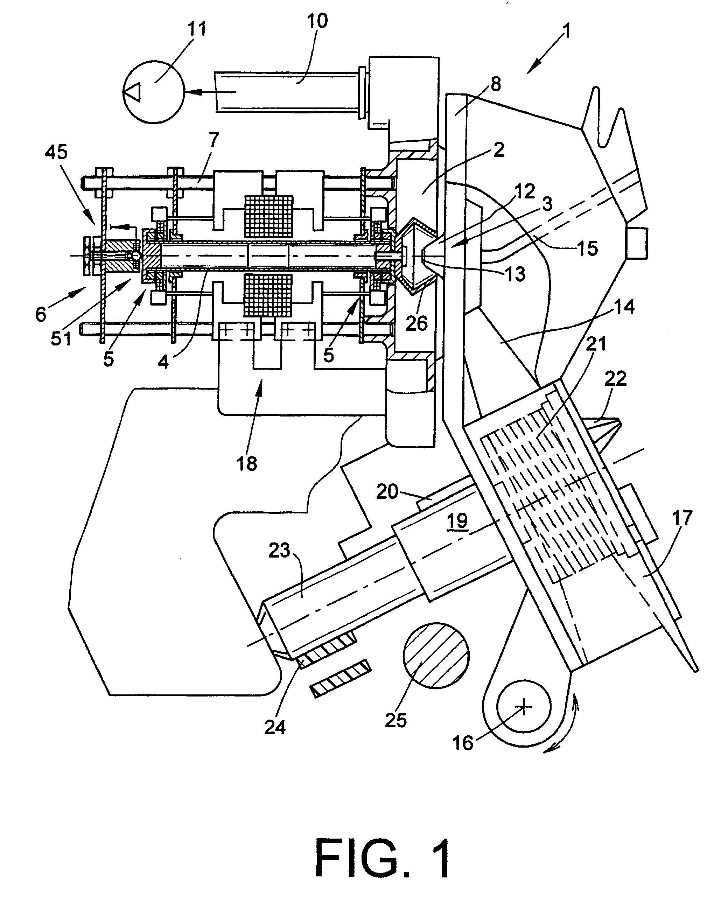

Die in Figur 1 dargestellte Offenend-Spinnvorrichtung trägt insgesamt die Bezugszahl 1.

Die bekannte Offenend-Spinnvorrichtung 1 verfügt, wie üblich, über ein Rotorgehäuse 2, in dem die Spinntasse 26 eines Spinnrotors 3 mit hoher Drehzahl umläuft.
Der Spinnrotor 3 wird dabei durch einen elektromotorischen Einzelantrieb 18 angetrieben und ist mit seinem Rotorschaft 4 in einer Magnetlageranordnung 5 abgestützt, deren Permanentmagnetlagerkomponenten 32, 33, 34; 42, 43, 44 den Rotorschaft 4 sowohl radial als auch axial abstützen.

Wie bekannt, ist das an sich nach vorne hin offene Rotorgehäuse 2 während des Betriebes durch ein schwenkbar gelagertes Deckelelement 8 verschlossen.
Das Rotorgehäuse 2 ist außerdem über eine entsprechende Absaugleitung 10 an eine Unterdruckquelle 11 angeschlossen, die den im Rotorgehäuse 2 notwendigen Spinnunterdruck erzeugt.

Im Deckelelement 8 beziehungsweise in der Kanalplatte ist, wie ebenfalls üblich, ein Kanalplattenadapter 12 angeordnet, der die Fadenabzugsdüse 13 sowie den Mündungsbereich des Faserleitkanales 14 aufweist. An die Fadenabzugsdüse 13 schließt sich ein Fadenabzugsröhrchen 15 an.

Das Deckelelement 8 ist um eine Schwenkachse 16 begrenzt drehbar gelagert und besitzt ein Auflösewalzengehäuse 17. Außerdem weist das Deckelelement 8 rückseitige Lagerkonsolen 19, 20 zur Lagerung einer Auflösewalze 21 beziehungsweise eines Faserbandeinzugszylinders 22 auf.
Die Auflösewalze 21 wird im Bereich ihres Wirtels 23 durch einen umlaufenden, maschinenlangen Tangentialriemen 24 angetrieben, während der (nicht dargestellte) Antrieb des Faserbandeinzugszylinders 22 vorzugsweise über eine Schneckengetriebeanordnung erfolgt, die auf eine maschinenlange Antriebswelle 25 geschaltet ist.

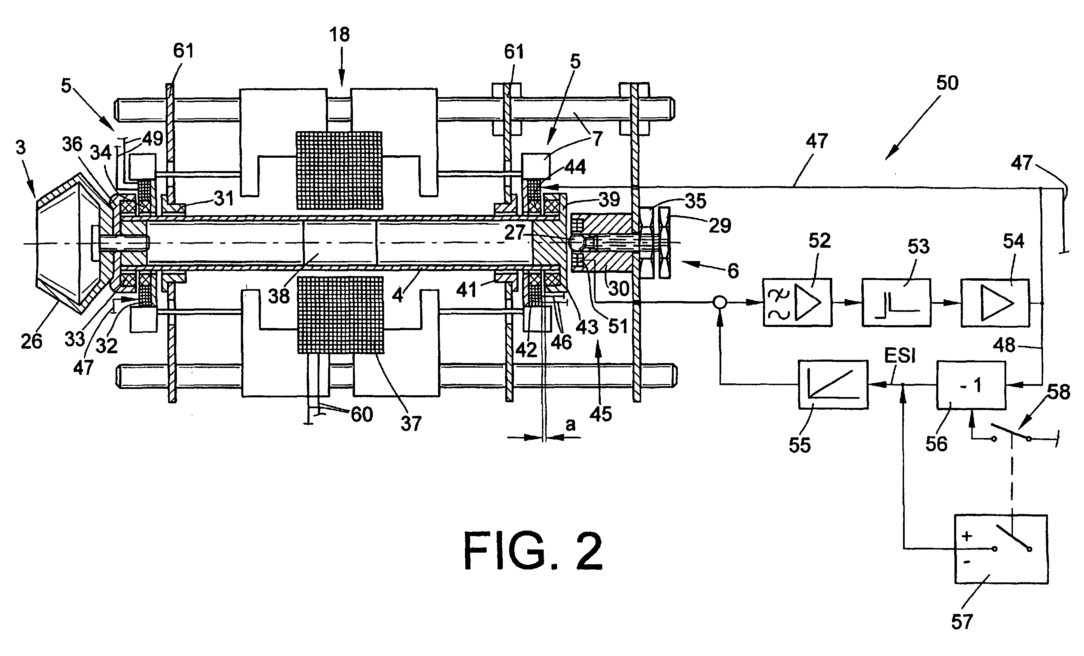

Die Figur 2 zeigt die in Fig.1 dargestellte Magnetlageranordnung 5 in einem vergrößerten Maßstab. In bevorzugter Ausführungsform weist die Magnetlageranordnung 5 dabei ein rückseitiges Axialfanglager 45 für den Rotorschaft 4 auf.
Die Bauform der dargestellten Magnetlageranordnung 5 ist, zumindest teilweise, durch den verwendeten Einzelantrieb 18 mit seinen Motormagneten 38 und seiner Motorspule 37 vorgegeben.

In vorteilhafter Ausführungsform sind am Statorgehäuse 7, an Abschirmwänden 61, Begrenzungslager 31 und 41 festgelegt, die radiale Endanschläge für den Rotorschaft 4 darstellen.
Diese Begrenzungslager 31, 41 verhindern einerseits, daß der Spinnrotor 3 beziehungsweise der Rotorschaft 4 beim Auftreten von Schwingungen an die relativ empfindlichen Magnetlagerkomponenten 34, 44 anlaufen kann und stellen andererseits sicher, daß auch ein Anlaufen der Rotortasse 26 an (nicht dargestellte) Spinnkomponenten verhindert wird.
Durch die Abschirmwände 61 wird außerdem die Beeinflussung der Magnetlagerkomponenten durch das Magnetfeld des elektromagnetischen Einzelantriebes 18 minimiert.

Am Stator 7 sind die nicht rotierenden Komponenten der Magnetlageranordnung 5 festgelegt. Im einzelnen handelt es sich dabei um die Magnetlagerspulen 32 und 42 mit ihren Anschlüssen 49 und 46 sowie um die Lagermagnete 34 und 44. Den Lagermagneten 34 und 44, die vorzugsweise als Permanentmagnete ausgebildet sind, stehen in geringem Abstand entsprechende Lagermagnete des Rotors gegenüber, die die Bezugszahlen 33 und 43 tragen. Auch die Lagermagnete 34 und 44 sind als Permanentmagnete ausgebildet.
Der vordere Lagermagnet 33 ist dabei beispielsweise in einer Rotortassenaufnahme 36 angeordnet, während der hintere Lagermagnet 43 in einem Lagerdeckel angeordnet ist, der die Bezugszahl 39 trägt.
Der Lagerdeckel 39 und die Rotortassenaufnahme 36 sind jeweils stirnseitig am Rotorschaft 4 angebracht bzw. fassen mit entsprechende Ansätzen in den vorzugsweise hohlen Rotorschaft 4. Wie aus den Figuren ersichtlich, ist an der Rotortassenaufnahme 36 außerdem die Rotortasse 26 des Spinnrotors 3 befestigt.

Wie vorstehend bereits angedeutet, ist im Endbereich des Rotorschaftes 4 in einem Lagerdeckel 39 ein Lagermagnet 43 angeordnet, der mit einem am Statorgehäuse 7 angeordneten hinteren Lagermagnet 44 korrespondiert. Im Bereich des hinteren Lagermagneten 44 ist außerdem eine als Aktor ausgebildete Lagerspule 42 mit ihren Anschlüssen 46 angeordnet.

In Figur 2 ist des weiteren eine insgesamt mit der Bezugszahl 50 gekennzeichnete Mittenlageregeleinrichtung in Form eines Blockschaltbildes dargestellt.

Diese Mittenlageregeleinrichtung 50 umfaßt im einzelnen einen Lagesensor 51, der beispielsweise in das Axialfanglager 45 integriert ist, eine Filter-/Verstärkereinheit 52, einen PD-Regler 53, einen Leistungsverstärker 54 sowie einen Integrator 55.

Des weiteren sind zur Beeinflussung des Eingangssignals (ESI) des Integrators 55 ein Negierungsglied 56 sowie ein Offset-Eingabemittel 57 vorgesehen, die über einen Schalter 58 aktiviert werden können.

### Funktion der Einrichtung:

Zur Inbetriebnahme einer stillstehenden Offenend-Spinnvorrichtung 1 wird durch eine Steuereinrichtung, vorzugeweise den Spulstellenrechner 40 der betreffenden Spulstelle, zunächst die Mittenlageregeleinrichtung 50 der betroffenen Offenend-Spinnvorrichtung 1 aktiviert. Das heißt, die Mittenlageregeleinrichtung 50 führt zunächst automatisch einen Nullabgleich des Spulenstromes (i) unter Berücksichtigung des Sensor-Offsets des Lagesensors 51 durch.

Basis für diesen Nullabgleich ist dabei die Lage des Spinnrotors 3 im Begrenzungslager.
Das heißt, in vorteilhafter Ausführungsform liegt der Spinnrotor 3 zu Beginn der Inbetriebnahme, aufgrund seiner Vorzugsfallrichtung, mit dem Ende seines Rotorschaftes 4 am Axialfanglager 45 an.

Im dargestellten Ausführungsbeispiel ist in dieses Axialfanglager 45 ein Lagesensor 51 integriert, der vorzugsweise als induktiver Sensor ausgebildet ist.

Das bedeutet, wenn auf eine entsprechende Spule des Lagesensors 51 eine definierte, hochfrequente Wechslspannung generiert wird, führt das Bedämpfen dieser Spule durch das Ende des Rotorschaftes 4 zu einem der Rotorlage entsprechenden Sensorausgangssignal.
Dieses sogenannte Lagesensor-Ausgangssignal (ASLS) wird zunächst, wie bekannt, in einer Filter- und Verstärkereinheit 52 bearbeitet und gelangt dann zu einem PD-Regler 53.

Im PD-Regler 53 wird das bearbeitete Lagesensor-Ausgangssignal (ASLS) so umgesetzt, daß von einem nachfolgenden Leistungsverstärker 54 über Leitungen 47 beziehungsweise 48 die Aktoren 32 beziehungsweise 42 im Bereich der Magnetlageranordnungen 5 bestromt werden.

Der Integrator 55, der ausgangsseitig direkt oder indirekt an die Eingangsseite des PD-Reglers 53 angeschlossen ist, wirkt dabei so in die Regelung zurück, daß, bei am Axialfanglager 45 anliegendem Spinnrotor 3 eine negative Rückkopplung des Spulenstromes (i) entsteht, die zunächst zu einem automatischen Nullabgleich des Spulenstromes (i) in den Aktoren 32 beziehungsweise 42 führt.

Durch den Spulstellenrechner 40 wird schließlich, zum Beispiel über einen Schalter 58, ein Negierungsglied 56 sowie ein Offset-Eingabemittel 57 aktiviert.
Die Negierung des Eingangssignals (ESI) des Integrators 55 führt in der Folge zu einer positiven Rückkopplung des Spulenstromes (i), wobei durch das Offset-Eingabemittel 57 die Polarität der Stromzunahme vorgegeben wird.
Die Stromzunahme in den Aktorspulen 32, 42 initiiert schließlich das Abheben des Spinnrotors 3 von seinem Axialfanglager 45 und die Überführung des Spinnrotors 3 in seine Betriebslage, in der die Magnetlagerkomponenten 33, 34 bzw. 43, 44 der Magnetlageranordnung 5 einen gegenseitigen Abstand a aufweisen.

Sobald der Spinnrotor 3 seine Betriebslage erreicht hat, die durch den Lagesensor 51 detektiert wird, wird der Spulenstrom (i) in den Aktoren 32 beziehungsweise 42 erneut gegen Null geregelt beziehungsweise so weit heruntergeregelt, daß während des Spinnbetriebes eine stabile Mittenlage im magnetischen Gleichgewicht des Spinnrotors 3 gewährleistet ist.

## Patentansprüche

1. Verfahren zum Betreiben einer Offenend-Spinnvorrichtung, deren Spinnrotor mit seinem Rotorschaft sowohl radial als auch axial in einer Magnetlageranordnung abgestützt ist, wobei die Magnetlager jeweils beabstandet angeordnete Permanentmagnetpaare aufweisen, mit einer elektromagnetischen Mittenlageregeleinrichtung, die über eine Sensoreinrichtung sowie wenigstens eine definiert bestrombare Aktorspule verfügt,
**dadurch gekennzeichnet,**
**daß** in der Mittenlageregeleinrichtung (50) ein Ausgangssignal (ASLS) eines Lagesensors (51) derart bearbeitet wird, daß ein durch einen PD-Regler (53) initiierter Spulenstrom (i) durch negative Rückkopplung eines Integrators (55) zunächst gegen Null geregelt wird,
**daß** anschließend durch Negierung des Eingangssignales (ESI) des Integrators (55) eine positive Rückkopplung des Spulenstromes (i) stattfindet, die zu einer zumindest zeitweisen Zunahme des Spulenstromes (i) in den Aktorspulen (32, 42) und damit zu einem Abheben des Spinnrotors (3) von seinem Axialfanglager (45) und zu einem Überführen des Spinnrotors (3) in seine Betriebslage führt und
**daß** schließlich, in der Betriebslage des Spinnrotors (3), der Spulenstrom (i) in den Aktoren (32, 42) wieder gegen Null geregelt wird.

2. Magnetlageranordnung einer Offenend-Spinnvorrichtung deren Spinnrotor mit seinem Rotorschaft sowohl radial als auch axial in einer Magnetlageranordnung abgestützt ist, wobei die Magnetlager jeweils beabstandet angeordnete Permanentmagnetpaare aufweisen, mit einer elektromagnetischen Mittenlageregeleinrichtung, die über eine Sensoreinrichtung sowie wenigstens eine definiert bestrombare Aktorspule verfügt, zur Durchführung des Verfahrens nach Anspruch 1,
**dadurch gekennzeichnet,**
**daß** die Mittenlageregeleinrichtung (50) wenigstens einen als induktiven Sensor ausgebildeten Lagesensor (51) zur Abgabe eines Ausgangssignals (ASLS), einen PD-Regler (53) zur Initiierung eines Spulenstromes (i) sowie einen Integrator (55) zur negativen Rückkopplung des Spulenstromes (i) aufweist, wobei das Eingangssignal (ESI) des Integrator (55) negierbar ist,
**daß** anschließend durch Negierung des Eingangssignales (ESI) des Integrators (55) eine positive Rückkopplung des Spulenstromes (i) stattfindet, die zu einer zumindest zeitweisen Zunahme des Spulenstromes (i) in den Aktorspulen (32, 42) und damit zu einem Abheben des Spinnrotors (3) von seinem Axialfanglager (45) und zu einem Überführen des Spinnrotors (3) in seine Betriebslage führt und;
**daß** schließlich, in der Betriebslage des Spinnrotors (3), der Spulenstrom (i) in den Aktoren (32, 42) wieder gegen Null geregelt wird.

3. Magnetlageranordnung nach Anspruch 2, **dadurch gekennzeichnet, daß** durch den Lagesensor (51) ein Ausgangssignal (ASLS) generierbar ist, dessen Wert proportional dem Abstand Rotorschaftende/Lagesensor ist.

4. Magnetlageranordnung nach Anspruch 2 und 3, **dadurch gekennzeichnet, daß** der Lagesensor (51) über eine zwischengeschaltete Filter-/Verstärkereinheit (52) an den PD-Regler (53) angeschlossen ist.

5. Magnetlageranordnung nach einem der vorherigen Ansprüche, **dadurch gekennzeichnet, daß** der PD-Regler (53) über einen Leistungsverstärker (54) sowohl mit wenigstens einem der Aktoren (32, 42) als auch mit dem Integrator (55) verbunden ist.

6. Magnetlageranordnung nach Anspruch 2, **dadurch gekennzeichnet, daß** der Integrator (55) eingangsseitig mit einem definiert zuschaltbaren Negierungsglied (56) verbunden ist.

7. Magnetlageranordnung nach Anspruch 2, **dadurch gekennzeichnet, daß** der Integrator (55) eingangsseitig auf einen Punkt der Regelschleife schaltbar ist, der eine Negation des Signals aufweist.

8. Magnetlageranordnung nach einem der vorherigen Ansprüche, **dadurch gekennzeichnet, daß** der Integrator (55) eingangsseitig mit einem die Polarität der Stromzunahme bestimmenden Offset-Eingabemittel 57) verbunden ist.

9. Lageranordnung nach einem der vorherigen Ansprüche, **dadurch gekennzeichnet, daß** das Eingangssignal (ESI) des Integrators (55) direkt vom Ausgang des PD-Reglers (53) abgeleitet ist.

10. Lageranordnung nach einem der vorherigen Ansprüche, **dadurch gekennzeichnet, daß** das Eingangssignal (ESI) des Integrators (55) unmittelbar vom Ausgang der Filter-/Verstärkereinheit (52) abgeleitet ist.

11. Lageranordnung nach einem der vorherigen Ansprüche, **dadurch gekennzeichnet, daß** das Eingangssignal (ESI) des Integrators (55) direkt vom Ausgang des Lagesensors (51) abgeleitet ist.

## Claims

1. A process for operating an open-end spinner, the spinning rotor of which, with its rotor shaft, is supported radially and also axially in a magnetic bearing device, the magnetic bearings each having spaced apart pairs of permanent magnets, having an electromagnetic central bearing control device, which has a sensor device and also at least one actuator coil through which current can flow in a defined manner,
**characterised in that** in the central bearing control device (50) an output signal (ASLS) of the position sensor (51) is processed in such a manner that a coil current (i) initiated by a PD controller (53) is firstly regulated towards zero by negative feedback of an integrator (55),
**in that** then by negating the input signal (ESI) of the integrator (55) a positive feedback of the coil current (i) takes place, which results in an at least temporary increase in the coil current (i) in the actuator coils (32, 42) and thus in the spinning rotor (3) being lifted from its axial thrust bearing (45) and in a transfer of the spinning rotor (3) into its operating position,
and **in that** finally, in the operating position of the spinning rotor (3), the coil current (i) in the actuators (32, 42) is again regulated towards zero.

2. A magnetic bearing device of an open-end spinner, the spinning rotor of which, with its rotor shaft, is supported radially and also axially in a magnetic bearing device, the magnetic bearings each having spaced apart pairs of permanent magnets, having an electromagnetic central bearing control device, which has a sensor device and at least one actuator coil through which current can flow in defined manner, for performing the method according to Claim 1,
**characterised in that** the central bearing control device (50) comprises at least one position sensor (51), constructed as an inductive sensor, for emitting an output signal (ASLS), a PD controller (53) for initiating a coil current (i) and also an integrator (55) for the negative feedback of the coil current (i), it being possible to negate the input signal (ESI) of the integrator (55), **in that** then, by negating the input signal (ESI) of the integrator (55), a positive feedback of the coil current (i) takes place, which results in an at least temporary increase in the coil current (i) in the actuator coils (32, 42) and thus in the spinning rotor (3) being lifted from its axial thrust bearing (45) and in a transfer of the spinning rotor (3) into its operating position,
and **in that** finally, in the operating position of the spinning rotor (3), the coil current (i) in the actuators (32, 42) is again regulated towards zero.

3. A magnetic bearing device according to Claim 2,
**characterised in that** an output signal (ASLS) can be generated by the position sensor (51) and its value is proportional to the distance between the rotor shaft end and the position sensor.

4. A magnetic bearing device according to Claim 2 and 3,
**characterised in that** the position sensor (51) is connected via an intermediate filter/amplifier unit (52) to the PD controller (53).

5. A magnetic bearing device according to one of the preceding Claims,
**characterised in that** the PD controller (53) is connected via a power amplifier (54) both to at least one of the actuators (32, 42) and also to the integrator (55).

6. A magnetic bearing device according to Claim 2,
**characterised in that** the integrator (55) is connected at the input side to a negating element (56) which can be added on in a defined manner.

7. A magnetic bearing device according to Claim 2,
**characterised in that** the integrator (55) can be switched at the input side to a point of the closed-loop control circuit which comprises a negation of the signal.

8. A magnetic bearing device according to one of the preceding Claims,
**characterised in that** the integrator (55) is connected at the input side to an offset input means 57) determining the polarity of the current increase.

9. A bearing device according to one of the preceding Claims,
**characterised in that** the input signal (ESI) of the integrator (55) is derived directly from the output of the PD controller (53).

10. A bearing device according to one of the preceding Claims,
**characterised in that** the input signal (ESI) of the integrator (55) is derived directly from the output of the filter/amplifier unit (52).

11. A bearing device according to one of the preceding Claims,
**characterised in that** the input signal (ESI) of the integrator (55) is derived directly from the output of the position sensor (51).

## Revendications

1. Procédé pour l'exploitation d'un dispositif de filature à extrémité ouverte, dont le rotor de filature est supporté par son axe de rotor aussi bien radialement qu'axialement dans un arrangement de paliers magnétiques, les paliers magnétiques présentant des paires d'aimants permanents chaque fois espacées, avec un dispositif électromagnétique de réglage de position centrale qui dispose d'un dispositif à capteur ainsi que d'au moins une bobine d'actionneur excitable de manière définie,
**caractérisé par le fait**
**qu'**un signal de sortie (ASLS) d'un capteur de position (51) est traité dans le dispositif de réglage de position centrale (50) de telle manière qu'un courant de bobine (i) initié par un régulateur PD (53) est d'abord ramené à zéro par rétroaction négative d'un intégrateur (55),
**qu'**ensuite, par inversion du signal d'entrée (ESI) de l'intégrateur (55), a lieu une rétroaction positive du courant de bobine (i) qui entraîne une augmentation au moins temporaire du courant de bobine (i) dans les bobines d'actionneur (32, 42) et ainsi un soulèvement du rotor de filature (3) de son palier de retenue axiale (45) et un transport du rotor de filature (3) dans sa position de travail et
**qu'**enfin, dans la position de travail du rotor de filature (3), le courant de bobine (i) dans les bobines d'actionneur (32, 42) est de nouveau ramené à zéro.

2. Arrangement de paliers magnétiques d'un dispositif de filature à extrémité ouverte, dont le rotor de filature est supporté par son axe de rotor aussi bien radialement qu'axialement dans un dispositif à paliers magnétiques, les paliers magnétiques présentant des paires d'aimants permanents chaque fois espacées, avec un dispositif électromagnétique de réglage de position centrale qui dispose d'un dispositif à capteur ainsi que d'au moins une bobine d'actionneur excitable de manière définie, pour la réalisation du procédé selon la revendication 1,
**caractérisé par le fait**
**que** le dispositif de réglage de position centrale (50) présente au moins un capteur de position (51) sous la forme d'un capteur inductif pour délivrer un signal de sortie (ASLS), un régulateur PD (53) pour initier un courant de bobine (i) ainsi qu'un intégrateur (55) pour la rétroaction négative du courant de bobine (i), le signal d'entrée (ESI) de l'intégrateur (55) étant inversable,
**qu'**ensuite, par inversion du signal d'entrée (ESI) de l'intégrateur (55), a lieu une rétroaction positive du courant de bobine (i) qui entraîne une augmentation au moins temporaire du courant de bobine (i) dans les bobines d'actionneur (32, 42) et ainsi un soulèvement ou enlèvement du rotor de filature (3) de son palier de retenue axiale (45) et un transport du rotor de filature (3) dans sa position de travail et
**qu'**enfin, dans la position de travail du rotor de filature (3), le courant de bobine (i) dans les bobines d'actionncur (32, 42) est de nouveau ramené à zéro.

3. Arrangement de paliers magnétiques selon la revendication 2, **caractérisé par le fait que** le capteur de position (51) peut générer un signal de sortie (ASLS) dont la valeur est proportionnelle à la distance extrémité d'axe de rotor/capteur de position.

4. Arrangement de paliers magnétiques selon les revendications 2 et 3, **caractérisé par le fait que** le capteur de position (51) est raccordé au régulateur PD (53) par l'intermédiaire d'une unité filtre/amplificateur (52) intercalée.

5. Arrangement de paliers magnétiques selon l'une des revendications précédentes, **caractérisé par le fait que** le régulateur PD (53) est relié par l'intermédiaire d'un amplificateur de puissance (54) aussi bien à au moins un des actionncurs (32, 42) qu'à l'intégrateur (55).

6. Arrangement de paliers magnétiques selon la revendication 2, **caractérisé par le fait que** l'intégrateur (55) est relié côté entrée à un circuit inverseur (56) pouvant être mis en circuit de manière définie.

7. Arrangement de paliers magnétiques selon la revendication 2, **caractérisé par le fait que** l'intégrateur (55) peut être connecté côté entrée à un point de la boucle de régulation qui présente une inversion du signal.

8. Arrangement de paliers magnétiques selon l'une des revendications précédentes, **caractérisé par le fait que** l'intégrateur (55) est relié côté entrée à un moyen d'entrée d'un décalage (57) déterminant la polarité de l'augmentation de courant.

9. Arrangement de paliers magnétiques selon l'une des revendications précédentes, **caractérisé par le fait que** le signal d'entrée (ESI) de l'intégrateur (55) est directement dérivé de la sortie du régulateur PD (53).

10. Arrangement de paliers magnétiques selon l'une des revendications précédentes, **caractérisé par le fait que** le signal d'entrée (ESI) de l'intégrateur (55) est directement dérivé de la sortie de l'unité filtre/amplificateur (52).

11. Arrangement de paliers magnétiques selon l'une des revendications précédentes, **caractérisé par le fait que** le signal d'entrée (ESI) de l'intégrateur (55) est directement dérivé de la sortie du capteur de position (51).
